# EUROPÄISCHE PATENTANMELDUNG

(11) **EP 1 047 203 A2**
(43) Veröffentlichungstag der Anmeldung: **25.10.2000**
(21) Anmeldenummer: 00440103.0
(22) Anmeldetag: 14.04.2000
(51) Int. Cl.: H04B 3/23

(54) **Verfahren zur Echounterdrückung durch Vorabermittlung einer Grundverzögerung**

(30) Priorität: 19.04.1999 DE 19917663
(71) Anmelder: ALCATEL, 75008 Paris (FR)
(72) Erfinder: Matt, Dr. Hans Jürgen, 71686 Remseck (DE)
(74) Vertreter: Müller, Joachim, Dipl.-Ing.

(57) **Zusammenfassung**

Ein Verfahren zur Echounterdrückung bei einer TK-Verbindung zwischen einem rufenden und einem gerufenen Teilnehmer auf einem TK-Kanal durch Einsatz eines konvergierenden Echounterdrückungsalgorithmus, ist dadurch gekennzeichnet, daß eine Grundverzögerungszeit t_{g} aufgrund der Mindestlaufzeit der TK-Signale zwischen dem rufenden und dem gerufenen Teilnehmer in dem betreffenden TK-Kanal oder zwischen den beiden beteiligten Vermittlungsstellen im betreffenden TK-Kanal, die den größten räumlichen Abstand voneinander haben, ermittelt und bei den Startwerten und/oder Koeffizienten für den Echounterdrückungsalgorithmus berücksichtigt wird. Damit wird mit einfachen Mitteln eine erhebliche Beschleunigung der Konvergenz von bekannten Echounterdrückungsalgorithmen ermöglicht. Vorzugsweise wird die Grundverzögerungszeit t_{g} für den betreffenden TK-Kanal in einem gerichteten Leitungsbündel aus der Kenntnis der Mindestlaufzeit in mindestens einem anderen TK-Kanal des gleichen Leitungsbündels abgeschätzt.

## Beschreibung

Die Erfindung betrifft ein Verfahren zur Echounterdrückung bei einer Telekommunikations(=TK)-Verbindung zwischen einem rufenden und einem gerufenen TK-Teilnehmer auf einem TK-Kanal durch Einsatz eines konvergierenden Echounterdrückungsalgorithmus.

Ein solches Verfahren zur Echounterdrückung sowie der Aufbau eines entsprechenden Echokompensators ist beispielsweise aus der EP 0 776 118 A2 bekannt.

Bei der Übertragung von Sprachsignalen auf Telekommunikationsleitungen können einerseits z.B. am "nahen Ende" bei dem aussendenden Benutzer akustische Echos aufgrund der direkten Schallübertragung vom Lautsprecher zum Mikrofon des Endgerätes entstehen. Insbesondere bei mehreren räumlich benachbart angeordneten Endgeräten, beispielsweise in einem Büro- oder Konferenzraum mit vielen Telefonanschlüssen, verschärft sich das Nahecho-Problem erheblich, da eine Kopplung von jedem Lautsprechersignal auf jedes Mikrofon erfolgt. Ein in der EP 0 627 825 A2 vorgeschlagenes Vielkanal-Echo-Unterdrükkungsverfahren und die zugehörige elektronische Schaltung sollen hier Abhilfe schaffen.

Neben dem nahen akustischen Echo gibt es aber auch ein ggf. aus unterschiedlich vielen Teilechos zusammengesetztes elektrisches Leitungsecho aufgrund von Reflexionen der ausgesendeten Sprachsignale an unterschiedlich entfernten Stellen im Übertragungskanal, beispielsweise bei 2-4-Drahthybriden (Gabelschaltungen) im Endgerät bzw. in Vermittlungsstellen und an Netzübergängen zwischen analogen und digitalen Netzen.

In heutigen Telefonnetzen können nahezu beliebig verschiedenen Signallaufzeiten zwischen einem Sprecher an einem (nahen) Leitungsende und einem anderen Sprecher an einem (fernen) Leitungsende auftreten. Der kleinste zeitliche Wert, den ein Signal benötigt, um von einem Ort A zu einem Ort B zu gelangen (Signal-Laufzeit), ist meist durch den Quotienten aus der kürzesten Entfernung und der Lichtgeschwindigkeit c bestimmt. Auf Kupfer- und Glasfaserkabeln ist die elektrische Energie (Licht-)Geschwindigkeit c' ≈ 2 · 10⁸ m/s < c = 3 · 10⁸ m/s im Vakuum.

Bei kleinen Entfernungen sind die Signallaufzeiten meist sehr gering (1 km = 5 µs) wogegen sie bei großen Entfernungen - besonders bei Übergragung über geostationäre Satelliten in einer Entfernung von 36000 km (= 240 ms) über der Erde - mehrere hundert ms betragen.

Weitere Verzögerungszeiten entstehen, wenn Kompressionseinrichtungen die Sprach-, Audio- bzw. Bildsignale vor dem Aussenden komprimieren und am Empfangsort wieder dekomprimieren müssen. Auf diese Weise können bei Sprachübertragung Signallaufzeiten im Bereich von ms bis s zusammenkommen.

Signallaufzeiten von > 30 ms machen sich bei Sprache sehr unangenehm bemerkbar, wenn elektrische Echos der Sprache von der anderen Seite kommend den Sprecher stören. In diesen Fällen muß man Echo-Unterdrücungseinrichtungen einsetzen, damit die Sprachverbindung eine akzeptable Qualität behält.

Unter normalen Umständen wird im Bereich von lokalen Vermittlungseinrichtungen für Telefonie keine Echo-Unterdrükkung benötigt, da die Entfernungen kurz und damit Echos nicht störend sind. Erst beim Übergang in Fernvermittlungsstellen, z.B. auf interkontinentalen Strecken, ist ein Einsatz von Echo-Cancellern nötig. Die Echo-Canceller werden üblicherweise nur auf der Fernstrecke eingesetzt. Damit wird ihre Zahl auf die Anzahl der Fernleitungen reduziert, die viel kleiner ist, als die der Telefonteilnehmer im lokalen Bereich. Nachteilig an diesem Konzept ist, daß vom Teilnehmer (wo die meisten elektrischen Echos an den 2-Draht/4-Draht-Übergängen entstehen) bis hin zur Fernvermittlung bereits Signallaufzeiten bis zu etwa 100 ms und mehr entstehen können.

Definitionsgemäß sieht eine Echo-Unterdrückungseinrichtung in Richtung von einer Fervermittlungsstelle aus hin zum lokalen Teilnehmer üblicherweise sogenannte "Nahbereichs-Echos" (*t* < 128 ms), in Richtung zum fernen Teilnehmer u.U. sogenannte "Fernbereichs-Echos" (100 ms < *t* < 700 ms).

Die Netzwerkbetreiber sind bestrebt, möglichst alle "Nahbereichs-Echos" zu eliminieren. Würde dies überall auf der Welt ausgeführt, so würde beim Zusammenschalten großer Netze kein Fernbereichs-Echo mehr auftreten. Da dies aber nicht in allen Ländern der Fall ist, wird auch relativ häufig eine Einrichtung zum Unterdrückung von Fernbereichs-Echos benötigt.

Auf den Übertragungsstrecken treten die Echos meist innerhalb eines zeitlich eng begrenzten Rahmens von < 64 ms auf. Diese Echos lassen sich mit Hilfe von adaptiven FIR Filtern nachbilden und vom echobehafteten Signal abziehen.

Dazu wird beispielsweise in der EP 0 792 029 A2 eine Echounterdrückungseinrichtung mit adaptivem Filter vorgeschlagen, die einen groben und einen feinen Detektor für Nahend-Sprachsignale umfaßt, welche beidseits der Echounterdrükkungseinrichtung angeordnet sind und somit das ankommende Signal vor und nach der Echounterdrückung beobachten können. In Sprachpausen vom nahen Ende soll damit eine Anpassung des Echokompensators an reflektierte Echosignale vorgenommen werden.

In der DE 44 30 189 A1 ist ein kostengünstiges Verfahren vorgeschlagen, das bei unterschiedlichen akustischen Bedingungen einsetzbar ist, und bei dem ein FIR-Filter eingesetzt wird, dessen Filterkoeffizienten nach dem NMLS-Algorithmus bestimmt werden. Zur Echounterdrückung in einem TK-Netz mit einer Vielzahl von parallelen Kanälen wird nach dieser Methode für jeden Kanal ein derartiger Echounterdrücker mit adaptivem FIR-Filter eingesetzt, der z.B. auf einem digitalen Signalprozessor in Software realisiert ist. Das adaptive FIR-Filter soll dabei das zu erwartende, möglicherweise aus mehreren Einzelechos bestehende Gesamtecho nachbilden und von dem an das TK-Endgerät übertragene, mit dem Echo behaftete Nutzsignal abziehen.

Neben dem oben beschriebenen Verfahren der Ausfilterung nachgebildeter Echosignale ist eine weitere, technisch einfacher zu realisierendere Methode der Echounterdrückung bekannt, nämlich das sogenannte "Compander-Prinzip". Dabei wird in einer Estimatorschaltung die Echokopplung eines Leitungsechos sowie seine Verzögerungszeit abgeschätzt und bei einer entsprechenden Absenkung des kurzzeitigen Empfangspegels in Sprachpausen mittels einer Kennlinien-Schaltung der Ausgangspegel derart abgesenkt, daß das ankommende Leitungsecho und eventuelle Hintergrundgeräusche effektiv unterdrückt werden. Es erfolgt dabei kein genereller Echoabzug vom ankommenden Nutzsignal im Empfangspfad, sondern lediglich eine "Maskierung" des Echos in den Sprachpausen durch entsprechende kurzzeitige Absenkung des Ausgangspegels. Während einer der beiden Teilnehmer spricht, also bei Vorliegen eines hohen Eingangspegels, wird der Ausgangspegel durch entsprechende Verschiebung der Kennlinien-Schaltung im oberen Bereich gehalten, da dann das wesentlich schwächere Echo unter dem hohen Pegel des Sprachsignals "versteckt" ist und sich nicht störend auswirkt. Dieses Compander-Prinzip ist beispielsweise in der DE 37 24 346 A1 beschrieben.

Alle diese bekannten Verfahren sind relativ kompliziert, zeitaufwendig und erfordern auf der Vorrichtungsseite recht komplex aufgebaute Echokompensatoren, auf der Softwareseite aufwendige, komplizierte, meist störungsanfällige Betriebsprogramme, die hohen Speicheraufwand und erhebliche Rechenleistung benötigen.

Aufgabe der vorliegenden Erfindung ist es demgegenüber, ein Echounterdrückungsverfahren der eingangs beschriebenen Art vorzustellen, das mit möglichst einfachen Mitteln eine erhebliche Beschleunigung der Konvergenz von bekannten Echounterdrückungsalgorithmen ermöglicht.

Erfindungsgemäß wir diese Aufgabe auf ebenso überraschend einfache wie wirkungsvolle Art und Weise dadurch gelöst, daß eine Grundverzögerungszeit t_{g} aufgrund der Mindestlaufzeit der TK-Signale zwischen dem rufenden und dem gerufenen TK-Teilnehmer in dem betreffenden TK-Kanal oder zwischen mindestens zwei beteiligten Vermittlungsstellen im betreffenden TK-Kanal, die in der Regel einen großen räumlichen Abstand voneinander haben, ermittelt und bei den Startwerten und/ oder Einstellung der Koeffizienten für den Echounterdrükkungsalgorithmus berücksichtigt wird.

Damit wird einer der größten Mängel bekannter Echounterdrükkungsverfahren unaufwendig und wirkungsvoll behoben. Ein Echo-Canceller für nahe Echos läßt sich nämlich ohne weiteres auch als Echo-Canceller für Fernechos verwenden, wenn die Grundverzögerungszeit t_{g} der fernen Echos bekannt ist. Das Hauptproblem hierbei, diese Echoverzögerung möglichst einfach, rasch und zuverlässig zu bestimmen, wird durch die vorliegende Erfindung gelöst. Vor das eigentliche Filterelement, das den Echounterdrückungsalgorithmus umsetzt, muß lediglich eine einstellbare Verzögerungsleitung geschaltet werden, die möglichst exakt die tatsächliche Mindestlaufzeit der Signale aufgrund der erfindungsgemäß abgeschätzten Grundverzögerungszeit t_{g} nachbildet. Dann kann das Filter selbst relativ kurz und aufwandsarm gehalten werden. Da die Signallaufzeiten von Verbindung zu Verbindung (call-by-call) sich stark verändern können, sollte allerdings für jede Verbindung die Grundverzögerungszeit t_{g} neu bestimmt werden.

Besonders bevorzugt ist eine Verfahrensvariante, bei der die für verschiedene TK-Ziele ermittelten Grundverzögerungszeiten t_{g} in einem Speicher abgelegt werden, der einem Echocanceller (EC) der betreffenden Vermittlungsstelle zugeordnet ist, wobei die entsprechenden Werte bei Neueinrichtung eines TK-Kanals dem entsprechenden Echocanceller der betreffenden Vermittlungsstelle automatisch zur Verfügung gestellt werden.

Dadurch kann bei einer Umkonfiguration von Leitungsbündeln oder Neuzuordnung von Echocancellern zu den Strecken eines Leitungsbündels die betreffenden Grundverzögerungsdaten aus dem Speicher gelesen und dem Echocanceller zur Voreinstellung übergeben werden.

Bei einer vorteilhaften Variante des erfindungsgemäßen Verfahrens wird daher die Mindestlaufzeit für den betreffenden TK-Kanal durch Einsatz eines freien Meßkanals eigens für die Laufzeitmessung auf der entsprechenden Strecke ermittelt.

Besonders bevorzugt ist eine Variante des erfindungsgemäßen Verfahrens, bei der die Grundverzögerungszeit t_{g} für den betreffenden TK-Kanal in einem gerichteten Leitungsbündel, vorzugsweise einem Fernleitungsbündel, aus der Kenntnis der Mindestlaufzeit in mindestens einem anderen TK-Kanal des gleichen Leitungsbündels abgeschätzt wird und entsprechende Koeffizienten und Startwerte zur Beschleunigung der Konvergenz des Echounterdrückungsalgorithmus eingegeben werden. Dadurch kann ein eigener freier Meßkanal eingespart werden, wobei die physikalische Haupteigenschaft des gerichteten Leitungsbündels, nämlich ungefähr gleiche Leitungslängen der einzelnen Kanäle vorteilhaft ausgenutzt werden.

Ganz besonders vorteilhaft ist es, wenn die Grundverzögerungszeit t_{g} für den betreffenden TK-Kanal aus einer statistischen Abschätzung der Mindestlaufzeiten und/oder Grundverzögerungszeiten vorheriger Verbindungen auf der gleichen Strecke, insbesondere im gleichen Leitungsbündel ermittelt wird. Damit kann die Qualität des abgeschätzten Wertes ohne nennenswerten Zusatzaufwand laufend verbessert werden.

Weiterhin von Vorteil ist es bei einer Weiterbildung dieser Verfahrensvariante, wenn zur Vorhersage einer aktuellen Verteilungsfunktion der Signallaufzeiten auf dem betreffenden TK-Kanal für eine statistische Abschätzung der Grundverzögerungszeit t_{g} eine bekannte Wahrscheinlichkeitsverteilung der Signallaufzeiten, beispielsweise eine Raleigh-Verteilung, angenommen wird.

Bei besonders bevorzugten Varianten des erfindungsgemäßen Verfahrens ist das verwendete Echounterdrückungssystem adaptiv gestaltet, also in gewissen Grenzen lernfähig. Insbesondere kann dann das Echounterdrückungssystem die jeweils günstigste Grundverzögerungszeit t_{g} automatisch einstellen.

Bei einer weiteren bevorzugten Verfahrensvariante ist vorgesehen, daß eine permanente optimale Anpassung der jeweiligen Grundverzögerungszeit t_{g} durch statistische Auswertung weiterer Laufzeitdaten aus anderen TK-Verbindungen auf derselben Strecke, insbesondere einem gerichteten Leitungsbündel erfolgt. Damit ist ein automatisches Lernen und eine ständige Optimierung des abgeschätzten Grundverzögerungszeitwertes möglich, so daß sich die Qualität des Verfahrensergebnisses ständig verbessert. Außerdem kann dadurch auch auf Änderungen in den physikalischen Gegebenheiten, beispielsweise Änderungen in den Leitungslängen des gerichteten Bündels, vom System selbst unmittelbar und automatisch reagiert werden.

Bei einer weiteren bevorzugten Verfahrensvariante ist der konvergierende Echounterdrückungsalgorithmus Bestandteil eines FIR(=Finite Impulse Response)-Filters, wie es beispielsweise in der oben zitierten DE 44 30 189 A1 an sich beschrieben ist.

Vorteilhaft wird das erfindungsgemäße Verfahren dergestalt durchgeführt, daß zu Beginn der TK-Verbindung, vorzugsweise vor oder während des Gesprächsaufbaus, eine vorgegebene Folge von Testimpulsen von der Echounterdrückungseinrichtung in Richtung auf den gerufenen und/oder den rufenden TK-Teilnehmer ausgesendet, die nach Ablauf der Grundverzögerungszeit t_{g} von der Echounterdrückungseinrichtung empfangenen Signale mit der vorgegebenen Folge von Testimpulsen korreliert und die vom Korrelator gemessenen Werte als erste Näherung für die Startwerte und/oder Koeffizienten des Echounterdrükkungsalgorithmus herangezogen werden.

Dabei kann die vorgegebene Folge von Testimpulsen eine Pseudo-Noise-Folge nach Lüke und Schotten umfassen, wie sie an sich in dem Zeitschriftenartikel "Odd-perfect almost binary correlation sequences" in IEEE Trans. Aerosp. Electron. Syst., AES-31; 1995; Seiten 495-498 veröffentlicht ist.

Besonders bevorzugt wird die zeitliche Länge der vorgegebenen Folge von Testimpulsen ungefähr gleich der Länge des FIR-Filters gewählt, um eine besonders schnelle Konvergenz des verwendeten Echounterdrückungsalgorithmus zu gewährleisten.

Vorzugsweise wird als Echounterdrückungsalgorithmus ein NLMS-Algorithmus eingesetzt, wie er an sich beispielsweise aus dem Zeitschriftenartikel "System identification with perfect sequences based on the NLMS algorithm", AEÜ Intern. Journal of Electronics and Communications 49; 1995; Seiten 129-134 beschrieben ist.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand eines Ausführungsbeispiels näher erläutert. Es zeigen:
- Fig. 1: eine schematische Darstellung des Aufbaus von Fernechos bei einem TK-System mit Echounterdrückungseinrichtung und erfindungsgemäßer Vorschaltung einer abgeschätzten Grundverzögerungszeit t_{g}; und
- Fig. 2: eine schematische Darstellung der Verbindung von TK-Netzwerken auf verschiedenen Kontinenten über gerichtete Leitungsbündel.

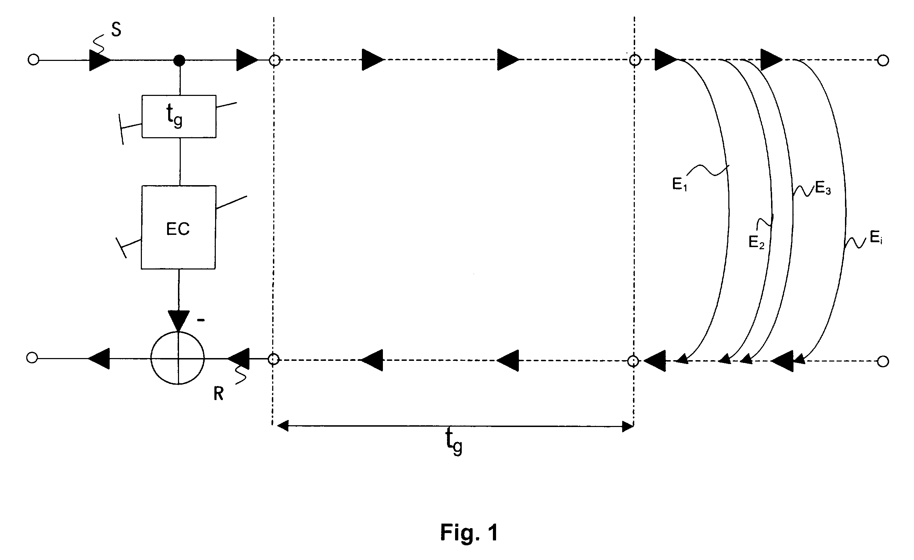

In Fig. 1 ist eine TK-Fernverbindung schematisch dargestellt, bei der ein Sendesignal S von einem rufenden Teilnehmer an einen fernen gerufenen Teilnehmer gesendet und ein Empfangssignal R auf der Leitungsstrecke vom fernen gerufenen Teilnehmer beim nahen rufenden Teilnehmer ankommt. Dieses Empfangssignal R ist belastet mit an verschiedenen Stellen der Leitung reflektierten Echosignalen, insbesondere den fernen Echosignalen E₁, E₂, ... Eᵢ. Daher wird beim nahen rufenden Teilnehmer mittels einer Echo-Canceller-Einrichtung EC vor dem Weiterleiten des Empfangssignales R an den Lautsprecher des Endgeräts eine Echounterdrückung durchgeführt.

Erfindungsgemäß wird hierzu eine vorab ermittelte, geschätzte oder gemessene Grundverzögerungszeit t_{g} eingestellt, die der Mindestlaufzeit der Signale S bzw. R vor Auftreten von Echoreflexionen am fernen Ende der Leitung entspricht. Das Zeitfenster, in welchem überhaupt nach fernen Echos gesucht werden muß, wird daher ganz erheblich reduziert, so daß der im Echo-Canceller EC ablaufende Echounterdrückungsalgorithmus wesentlich schneller zur Konvergenz gebracht werden kann. Bei gleicher Echo-Unterdrückungsqualität wird der Rechenaufwand damit auf ein Minimum reduziert.

Die Ermittlung der Mindestlaufzeit für einen bestimmten TK-Kanal kann aus einer statistischen Abschätzung durch vorherige Verbindungen auf der gleichen Strecke, z.B. im gleichen Leitungsbündel oder durch Einsatz eines freien Meßkanals eigens für die Laufzeitmessung auf der Strecke erfolgen. Die für die jeweilige Streckenführung typischen Laufzeitwerte können auch aus einem Grundwertespeicher ausgelesen und abzüglich eine Schutzwertes als Grundverzögerungszeit t_{g} beim Echocanceller EC eingestellt werden. Das System kann adaptiv gestaltet sein und sich ständig automatisch durch statistische Auswertung weiterer Laufzeitdaten aus anderen TK-Verbindungen auf derselben Strecke anpassen.

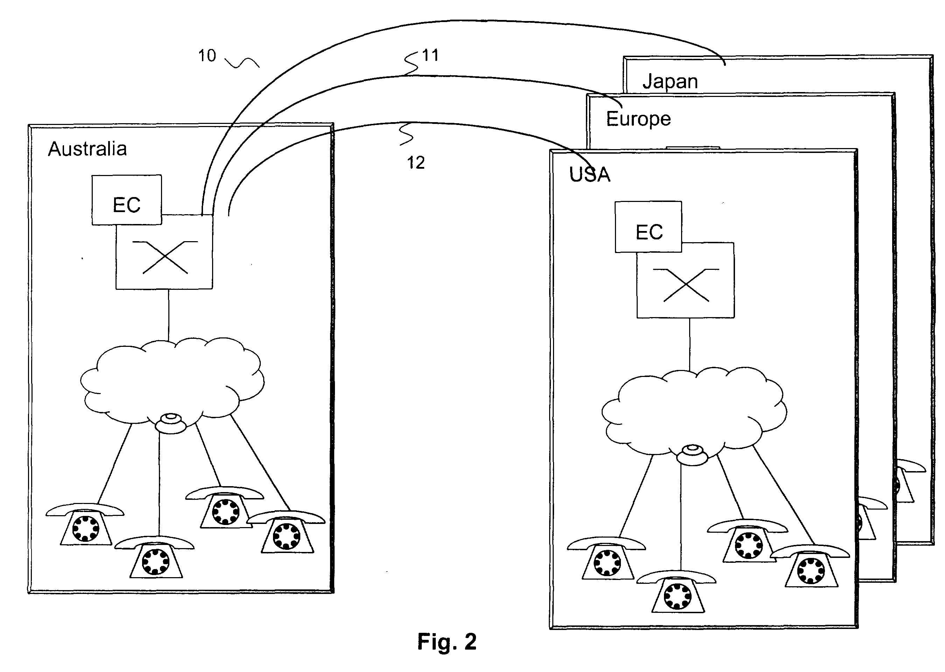

Bei Übertragungssystemen, die (an einer Stelle einer Fernvermittlung) eine Vielzahl von Telefonkanälen übertragen, kann es vorkommen, daß das gesamte Leitungsbündel 10, 11, 12 zu einem bestimmten Punkt in einem fernen Land geführt wird, wie in Fig. 2 illustriert ist. In diesem Fall weiß der Operator vorab, daß dieses Bündel zu einem bestimmten Ziel führt, er mag aber nicht einen groben Wert der Laufzeit kennen, die sozusagen alle Signale betrifft. Er mag beim Einrichten der Strecken (Konfigurieren) der Vermittlungsstelle auch nicht damit belästigt werden. Er kann jedoch ein Steuerzeichen setzen, das die Zuweisung des Leitungsbündels zu einem fernen Zeitpunkt erkennen läßt. Dazu kann ein Operator z.B. ein Leitungsbündel (gemäß der PDH- oder SDH-Hierarchie) als zu einem fernen Ort gerichtet kennzeichnen (z.B. von Berlin nach New York). Diese Information wird der Einrichtung zur Echo-Unterdrückung mitgeteilt.

Erfindungsgemäß wird in diesem Fall daher aus den gemessenen Verzögerungszeiten in verschiedenen Kanälen eines Leitungsbündels anhand einer Statistik geschätzt, wie groß die Mindestverzögerung pro Kanal in diesem Leitungsbündel ist und dieser Schätzwert einer Grundverzögerungszeit t_{g} zugrunde gelegt.

Ferner kann das System selbst einen freien Kanal im Bündel verwenden bzw. anrufen, um vorab eine Verbindung ausschließlich für Meßzwecke aufzubauen, mit dem Ziel, die Grundverzögerungszeit t_{g} zum fernen Ende automatisch zu bestimmen und im Grundwertespeicher abzulegen.

Aus den Anfangsmessungen (z.B. nach dem Einschalten von Betriebsspannung bzw. nach dem Initialisieren der Echo-Canceller Baugruppe) in mehreren verschiedenen Kanälen eines Echocancellers EC kann die jeweilige Mindestlaufzeit ermittelt und mit Hilfe eines Schätzers für die übrigen, zeitlich nachfolgenden Verbindungen eine wahrscheinliche Mindestlaufzeit nebst Verteilungsfunktion vorhergesagt werden, deren Wert der Grundverzögerungszeit t_{g} zugewiesen und im Grundwertespeicher abgelegt wird.

Dabei kann eine ggf. prinzipiell bekannte Wahrscheinlichkeitsverteilung der Signallaufzeiten (z.B. Raleigh-Verteilung) zur Vorhersage der aktuellen Verteilungsfunktion verwendet werden, indem z.B. aus den gemessenen Daten Schätzwerte für die Parameter der aktuellen Verteilungsfunktion bestimmt werden.

Die Kenntnis einer solchen Mindestlaufzeit vereinfacht die Suche nach möglichen Laufzeiten erheblich und reduziert so die Rechenleistung im Echocanceller System. Damit wird es möglich, mehrere Kanäle z.B. mit einem einzigen Signalprozessor-System (DSP) quasi gleichzeitig zu bearbeiten.

Ist einmal eine Mindestlaufzeit und ihre Verteilungsfunktion bekannt, so kann eine jede neue Messung in einem Kanal gleich den wahrscheinlichsten Wert für t_{g} als Voreinstellung für die Grundverzögerungszeit verwenden.

Damit reduziert sich der verbleibende zeitliche Suchbereich für Echos deutlich und es kann quasi in einem Schritt die Echoimpulsantwort, d.h. die Eigenschaften der Echos und damit die Koeffizienten des zur Echounterdrückung benötigten FIR Filters ausgemessen werden.

Dazu werden vorzugsweise spezielle quasi perfekte Pseudo-Noise-Folgen nach Lüke und Schotten in der Länge N ausgesendet mit der Geschwindigkeit fs (Abtastfrequenz), wobei die Länge der Subfolge n in Zeichen (n = tn x fs) möglichst den erwarteten zeitlichen Bereich von Echos (t1 ... tn) abgedeckt und z.B. N = 2...3 x n beträgt.

Auf der Empfangsseite wird nach Ablauf der Grundverzögerungszeit t_{g} auf diese Folge korreliert. Die nun im Korrelator gemessenen Werte [(Ai), (Ti)] stellen ein genaues Abbild der Echos nach Amplitude und Verzögerung dar, so daß diese Werte als sehr gute erste Näherung in das FIR-Filter geladen werden können.

Bei einer weiteren Methode nach Antweiler wird ebenfalls eine Lüke-Folge obigen Typs ausgesendet, die der Länge des FIR-Filters möglichst nahe kommt. Dann wird auf der Empfangsseite nach Ablauf der Grundverzögerungszeit t_{g} der NLMS-Algorithmus gestartet und die Filterkoeffizienten werden auf Anhieb genau bestimmt.

## Patentansprüche

1. Verfahren zur Echounterdrückung bei einer Telekommunikations(=TK)-Verbindung zwischen einem rufenden und einem gerufenen TK-Teilnehmer auf einem TK-Kanal durch Einsatz eines konvergierenden Echounterdrückungsalgorithmus,
dadurch gekennzeichnet,
daß eine Grundverzögerungszeit t_{g} aufgrund der Mindestlaufzeit der TK-Signale zwischen dem rufenden und dem gerufenen TK-Teilnehmer in dem betreffenden TK-Kanal oder zwischen mindestens zwei beteiligten Vermittlungsstellen im betreffenden TK-Kanal ermittelt und bei den Startwerten und/oder Koeffizienten für den Echounterdrückungsalgorithmus berücksichtigt wird.

2. Verfahren nach Anspruch 1, dadurch gekennzeichnet, daß die für verschiedene TK-Ziele ermittelten Grundverzögerungszeiten t_{g} in einem Speicher abgelegt werden, der einem Echocanceller (EC) der betreffenden Vermittlungsstelle zugeordnet ist, und daß die entsprechenden Werte bei Neueinrichtung eines TK-Kanals dem entsprechenden Echocanceller der betreffenden Vermittlungsstelle automatisch zur Verfügung gestellt werden.

3. Verfahren nach Anspruch 1 oder 2, dadurch gekennzeichnet, daß die Mindestlaufzeit für den betreffenden TK-Kanal durch Einsatz eines freien Meßkanals eigens für die Laufzeitmessung auf der entsprechenden Strecke ermittelt wird.

4. Verfahren nach Anspruch 1 oder 2, dadurch gekennzeichnet, daß die Grundverzögerungszeit t_{g} für den betreffenden TK-Kanal in einem gerichteten Leitungsbündel (10, 11, 12) aus der Kenntnis der Mindestlaufzeit in mindestens einem anderen TK-Kanal des gleichen Leitungsbündels (10, 11, 12) abgeschätzt wird und entsprechende Koeffizienten und Startwerte zur Beschleunigung der Konvergenz des Echounterdrückungsalgorithmus eingegeben werden.

5. Verfahren nach Anspruch 4, dadurch gekennzeichnet, daß die Grundverzögerungszeit t_{g} für den betreffenden TK-Kanal aus einer statistischen Abschätzung der Mindestlaufzeiten und/oder Grundverzögerungszeiten vorheriger Verbindungen auf der gleichen Strecke, insbesondere im gleichen Leitungsbündel (10, 11, 12) ermittelt wird.

6. Verfahren nach Anspruch 5, dadurch gekennzeichnet, daß zur Vorhersage einer aktuellen Verteilungsfunktion der Signallaufzeiten auf dem betreffenden TK-Kanal für eine statistische Abschätzung der Grundverzögerungszeit t_{g} eine bekannte Wahrscheinlichkeitsverteilung der Signallaufzeiten, beispielsweise eine Raleigh-Verteilung, angenommen wird.

7. Verfahren nach einem der vorhergehenden Ansprüche, dadurch gekennzeichnet, daß das verwendete Echounterdrückungssystem adaptiv gestaltet ist.

8. Verfahren nach Anspruch 7 sowie einem der Ansprüche 4 bis 6, dadurch gekennzeichnet, daß eine permanente optimale Anpassung der jeweiligen Grundverzögerungszeit t_{g} durch statistische Auswertung weiterer Laufzeitdaten aus anderen TK-Verbindungen auf derselben Strecke, insbesondere einem gerichteten Leitungsbündel (10, 11, 12) erfolgt.

9. Verfahren nach einem der vorhergehenden Ansprüche, dadurch gekennzeichnet, daß der konvergierende Echounterdrückungsalgorithmus Bestandteil eines FIR(=Finite Impulse Response)-Filters ist.

10. Verfahren nach einem der vorhergehenden Ansprüche, dadurch gekennzeichnet, daß zu Beginn der TK-Verbindung, vorzugsweise vor oder während des Gesprächsaufbaus, eine vorgegebene Folge von Testimpulsen von der Echounterdrückungseinrichtung in Richtung auf den gerufenen und/ oder den rufenden TK-Teilnehmer ausgesendet wird, die nach Ablauf der Grundverzögerungszeit t_{g} von der Echounterdrückungseinrichtung empfangenen Signale mit der vorgegebenen Folge von Testimpulsen korreliert und die vom Korrelator gemessenen Werte als erste Näherung für die Startwerte und/oder Koeffizienten des Echounterdrückungsalgorithmus herangezogen werden.

11. Verfahren nach Anspruch 10, dadurch gekennzeichnet, daß die vorgegebene Folge von Testimpulsen eine Pseudo-Noise-Folge nach Lüke und Schotten umfaßt.

12. Verfahren nach Anspruch 9 und 10 oder 11, dadurch gekennzeichnet, daß die zeitliche Länge der vorgegebenen Folge von Testimpulsen ungefähr gleich der Länge des FIR-Filters gewählt wird.

13. Verfahren nach Anspruch 12, dadurch gekennzeichnet, daß als Echounterdrückungsalgorithmus der NLMS-Algorithmus verwendet wird.
